# EUROPEAN PATENT APPLICATION

(11) **EP 2 808 980 A2**
(43) Date of publication of application: **03.12.2014**
(21) Application number: 14167940.7
(22) Date of filing: 12.05.2014
(51) Int. Cl.: H02K 1/27

(54) **Motor**

(30) Priority: 28.05.2013 KR 20130060463
(71) Applicant: Samsung Electronics Co., Ltd, Gyeonggi-do 443-742 (KR)
(72) Inventor: Kang, Dong Woo, Seoul (KR); Kim, Young Kwan, Gyeonggi-do (KR)
(74) Representative: Walaski, Jan Filip

(57) **Abstract**

A motor includes a stator including stator cores and coils wound on the stator cores, a rotor disposed at the inside of the stator and rotated by electromagnetic interaction with the stator, and a motor shaft combined with the rotor so as to be rotated together with the rotor. The rotor includes a plurality of rotor cores arranged to be separated from each other in the circumferential direction of the rotor, a plurality of rotor slots formed between the plurality of rotor cores, a plurality of permanent magnets inserted into the plurality of rotor slots, and a plurality of cover members connecting neighboring rotor cores to close one opened side of each of the plurality of rotor slots.

## Description

The present invention relates to a motor having an improved structure to enhance performance.

In general, a motor is a machine producing rotary force from electric energy, and includes a stator and a rotor. The rotor is configured to electromagnetically interact with the stator and is rotated by force acting between a magnetic field and current flowing along coils.

Permanent magnet motors using permanent magnets to generate a magnetic field may be divided into a surface mounted permanent magnet motor, an interior type permanent magnet motor, and a spoke type permanent magnet motor.

Among them, the spoke type permanent magnet motor structurally has high magnetic flux concentration and thus may generate high torque and high output and be minimized at the same output. The spoke type permanent magnet motor may be applied as a washing machine driving motor, an electric vehicle driving motor, and a small-sized generator driving motor requiring high torque and high output.

In general, a rotor of the spoke type permanent magnet motor includes permanent magnets disposed in a radial shape about a rotary shaft, and cores provided to support the permanent magnets and to form paths of magnetic flux.

In such a spoke type permanent magnet motor, when the rotor is rotated, loss due to fluid resistance around the rotor may be generated and thus, performance of the motor may be lowered.

Further, in the spoke type permanent magnet motor, the cores may be damaged or broken or the permanent magnets may be separated from the cores due to centrifugal force generated during a process of rotating the rotor at high speed.

Further, if strength of the rotor is increased using a strength reinforcing structure to prevent separation of the permanent magnets from the cores or deformation or breakage of the cores, a part of magnetic flux may leak by the strength reinforcing structure. When magnetic flux leakage increases, the amount of permanent magnets used in the motor having the same output increases, material costs are raised and motor miniaturization is not easy.

Therefore, it is an aspect of the present disclosure to provide a motor having an improved structure to enhance performance.

It is another aspect of the present disclosure to provide a rotor having an improved structure to enhance strength and a motor having the same.

Additional aspects of the disclosure will be set forth in part in the description which follows and, in part, will be apparent from the description, or may be learned by practice of the disclosure.

In accordance with one aspect of the present disclosure, a motor includes a stator including stator cores and coils wound on the stator cores, a rotor disposed at the inside of the stator and rotated by electromagnetic interaction with the stator, and a motor shaft combined with the rotor so as to be rotated together with the rotor, wherein the rotor includes a plurality of rotor cores arranged to be separated from each other in the circumferential direction of the rotor, a plurality of rotor slots formed between the plurality of rotor cores, a plurality of permanent magnets inserted into the plurality of rotor slots, and a plurality of cover members connecting neighboring rotor cores to close one opened side of each of the plurality of rotor slots.

The plurality of cover members may be formed integrally with the plurality of rotor cores.

Each of the plurality of rotor cores may include at least one outer support protrusion protruding to support the outer end of a neighboring permanent magnet.

The plurality of cover members may be disposed at the outside of the at least one outer support protrusion in the radial direction of the rotor.

The plurality of the cover members may be separated from the at least one outer support protrusion.

The thickness of the plurality of the cover members in the radial direction of the rotor may be 0.2mm to 2mm.

The thickness of the at least one outer support protrusion in the radial direction of the rotor may be 0.5mm to 2mm.

The thickness of the plurality of the cover members may be equal to the thickness of the at least one outer support protrusion or smaller than the thickness of the at least one outer support protrusion.

Each of the plurality of rotor cores may further include at least one inner support protrusion protruding to support the inner end of the neighboring permanent magnet.

The thickness of the at least one inner support protrusion in the radial direction of the rotor may be 0.5mm to 2mm.

Each of the plurality of the cover members may include at least one incision part formed in the extending direction of the motor shaft.

The width of the at least one incision part in the circumferential direction of the rotor may be 0.4mm to 1mm.

Each of the plurality of permanent magnets may include a width increasing part, the width of which gradually increases in at least some of sections thereof outward in the radial direction of the rotor.

Each of the plurality of permanent magnets may include a width decreasing part, the width of which gradually decreases in at least some of sections thereof outward in the radial direction of the rotor.

The width of the plurality of permanent magnets may gradually increase and then decrease outward in the radial direction of the rotor.

In accordance with another aspect of the present disclosure, a motor includes a stator and a rotor rotatably disposed at the inside or outside of the stator, wherein the rotor includes a plurality of rotor cores arranged in a radial shape to be separated from each other, a plurality of rotor slots formed between the plurality of rotor cores, and a plurality of permanent magnets inserted into the plurality of rotor slots, wherein the plurality of rotor cores includes first protrusions protruding toward the plurality of rotor slots to support the outer ends of the plurality of permanent magnets, and second protrusions protruding toward the plurality of rotor slots to close one opened side of each of the plurality of rotor slots.

The second protrusions of each of the plurality of rotor cores may be connected to other rotor cores neighboring to the each of the plurality of rotor cores.

The protruding length of the first protrusions may be smaller than the protruding length of the second protrusions.

The thickness of the first protrusions may be greater than the thickness of the second protrusions.

The area of one side surface of each of the plurality of permanent magnets may be greater than the area of a virtual plane connecting the outer end of each of the plurality of permanent magnets and the inner end of each of the plurality of permanent magnets at the shortest distance.

One side surface of each of the plurality of permanent magnets may be formed in a bending shape in the circumferential direction of the rotor.

One side surface of each of the plurality of permanent magnets may include a first inclined surface inclined from the virtual plane, and a second inclined surface connected to the first inclined surface so as to be inclined from the first inclined surface.

The motor may further include third protrusions supporting the inner ends of the plurality of permanent magnets, and the second protrusions and the third protrusions may be disposed such that the first protrusions are formed therebetween.

These and/or other aspects of the disclosure will become apparent and more readily appreciated from the following description of the embodiments, taken in conjunction with the accompanying drawings of which:
FIG. 1 is a cross-sectional view illustrating the configuration of a motor in accordance with one embodiment of the present disclosure;
FIG. 2 is a perspective view of a stator in the motor in accordance with the embodiment of the present disclosure;
FIG. 3 is a perspective view of a rotor in accordance with the embodiment of the present disclosure;
FIG. 4 is an exploded perspective view of the rotor in accordance with the embodiment of the present disclosure;
FIG. 5 is a view illustrating the motor in accordance with the embodiment of the present disclosure from which some parts of the stator and the rotor are omitted;
FIG. 6 is a partial enlarged view of the rotor in accordance with the embodiment of the present disclosure;
FIGS. 7A and 7B are views illustrating a principle of reducing resistance due to flux around the rotor by a cover member during the rotating process of the rotor;
FIGS. 8A and 8B are views illustrating other examples of permanent magnets in the rotor in accordance with the embodiment of the present disclosure;
FIG. 9 is a perspective view illustrating a modification of the cover member in the rotor in accordance with the embodiment of the present disclosure; and
FIG. 10 is a cross-sectional view illustrating the modification of the cover member in the rotor in accordance with the embodiment of the present disclosure.

Reference will now be made in detail to the embodiments of the present disclosure, examples of which are illustrated in the accompanying drawings, wherein like reference numerals refer to like elements throughout. Hereinafter, an axial direction X means a direction parallel with a motor shaft. A circumferential direction C and a radial direction R mean a direction of the circumference of a circle formed about the motor shaft and a direction of the radius of the circle.

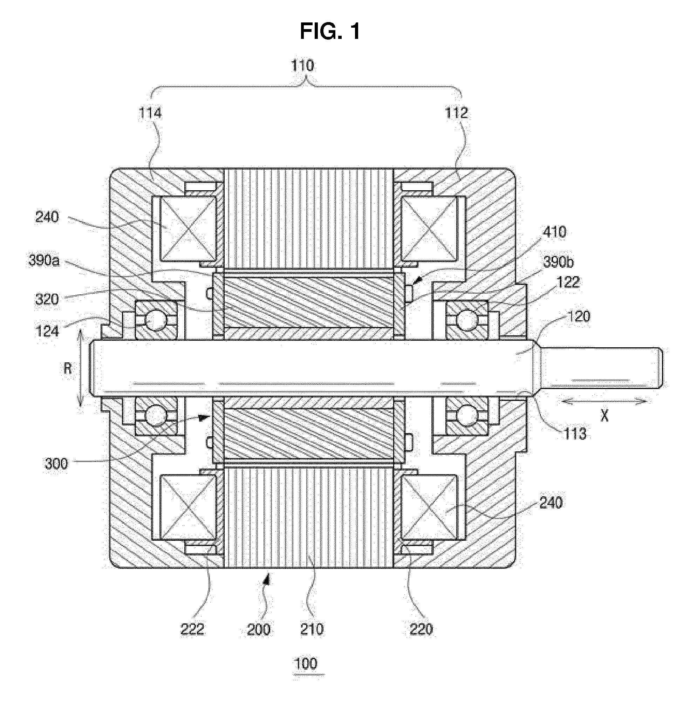

As exemplarily shown in FIG. 1, a motor 100 includes a motor housing 110 forming the external appearance of the motor 100. The motor housing 110 may include a first housing 112 and a second housing 114 separated from each other in the axial direction of the motor 100. The first housing 112 and the second housing 114 may be combined with a stator 200.

The stator 200 and a rotor 300 are disposed within the motor housing 110. The stator 200 may be fixed to the motor housing 110. The rotor 300 is configured so as to be rotated by electromagnetic interaction with the stator 200. The rotor 300 may be disposed within the stator 200.

A motor shaft 120 is inserted into the rotor 300 so as to be rotated together with the rotor 300. One side of the motor shaft 120 is rotatably supported by the first housing 112 through a bearing 122, and the other side of the motor shaft 120 is rotatably supported by the second housing 114 through a bearing 124. One end of the motor shaft 120 protrudes to the outside of the motor housing 110 through an opening 113 formed on the first housing 112.

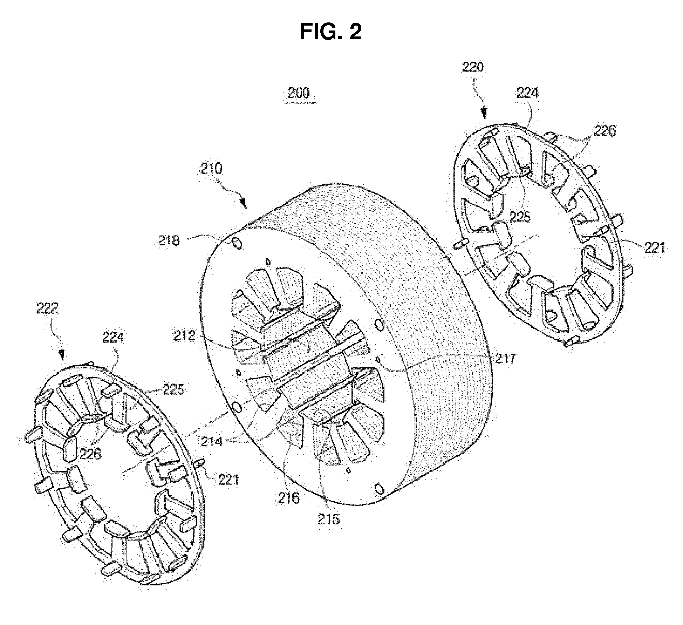

As exemplarily shown in FIGS. 1, 2, and 5, the stator 200 may include a stator body 210, a first insulator 220, a second insulator 222, and coils 240. In FIG. 2, the coils 240 are omitted.

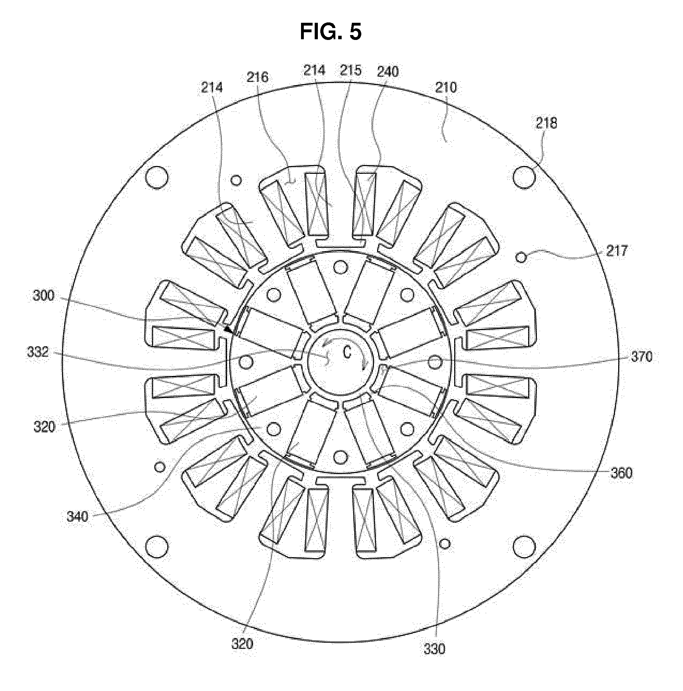

A space to receive the rotor 300, i.e., a rotor reception part 212, is formed at the center of the stator body 210. Stator cores 214 are arranged around the rotor reception part 212 in the circumferential direction (in the direction C, with reference to FIG. 5) of the rotor 300. The stator cores 214 extend from the rotor reception part 212 in the radial shape. The stator body 210 may be formed by stacking steel plates manufactured by pressing.

The stator cores 214 are disposed at intervals in the circumferential direction and thus, stator slots 216 are formed between the stator cores 214. Since the coils 240 are wound on the stator cores 214, the coils 240 are received in the stator slots 216. An expanding core part 215 having an expanding width is formed at the inner end of each of the stator cores 214 adjacent to the rotor 300. A gap for rotation of the rotor 300 is formed between the inner surface of the expanding core part 215 and the outer surface of the rotor 300.

The first insulator 220 and the second insulator 222 are formed of an electrically insulating material, and are disposed at both sides of the stator body 210 in the axial direction. The first insulator 220 and the second insulator 222 are combined with both sides of the stator body 210 so as to cover the stator cores 214. Combination protrusions 221 protruding toward the stator body 210 are formed on the first insulator 220 and the second insulator 222, and the combination protrusions 221 are inserted into combination holes 217 formed on the stator body 210.

Each of the first insulator 220 and the second insulator 222 includes a circular frame 224, coil support parts 225 corresponding to the stator cores 214, and coil guide parts 226 protruding from the inner and outer ends of the coil support parts 225 in the radial direction. The coil support parts 225 are separated from each other in the circumferential direction and thus, spaces corresponding to the stator slots 216 are formed between the coil support parts 225.

The coil 240 is wound on the stator core 214 and the coil support parts 225 of the first and second insulators 220 and 222 under the condition that the first insulator 220 and the second insulator 222 are combined with the stator body 210. Insertion holes 218 passing through the stator body 210 in the axial direction may be formed on the stator body 210. Fastening members (not shown), such as pins, rivets, or bolts to combine the respective plates forming the stator body 210, are inserted into the insertion holes 218.

Housing through holes (not shown) are formed on the first housing 112 and the second housing 114 so as to correspond to the insertion holes 218 of the stator body 210 and thus, the first housing 112, the second housing 114, and the stator 200 may be fixed by the fastening members.

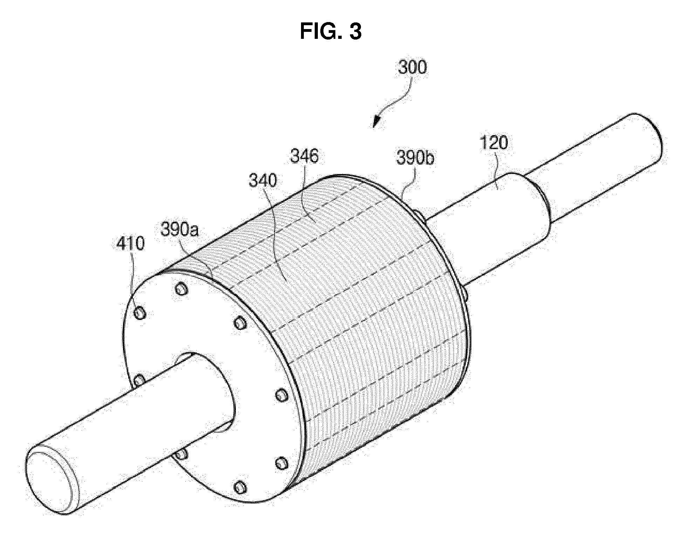

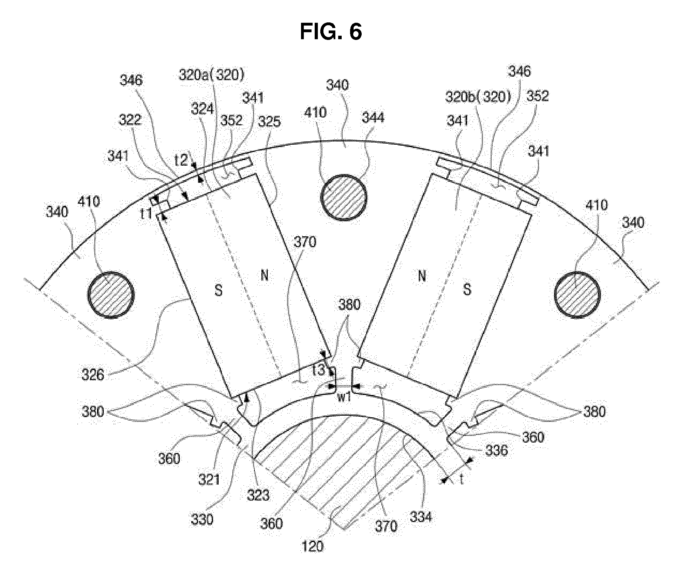

As exemplarily shown in FIGS. 3 to 6, the rotor 300 includes a rotor body 310 disposed in the rotor reception part 212 of the stator body 210, and permanent magnets 320 inserted into the rotor body 310. The rotor body 310 may be formed by stacking plate members manufactured by pressing a silicon steel sheet.

In order to increase structural stiffness of the rotor 300, a first cover plate 390a and a second cover plate 390b may be disposed at both sides of the robot body 310 in the axial direction (in the direction X). A shaft reception hole 392 is formed at the center of each of the first cover plate 390a and the second cover plate 390b so as to receive the motor shaft 120.

The first and second cover plates 390a and 390b are disposed so as to cover the outer sides of the permanent magnets 320 in the axial direction and thus, prevent the permanent magnets 320 from being separated from the rotor 300 in the axial direction. Further, the first and second cover plates 390a and 390b may be used as structures to balance the rotor 300, if the rotor 300 is unbalanced. The first and second cover plates 390a and 390b may be formed of a non-magnetic material, for example, copper or stainless steel.

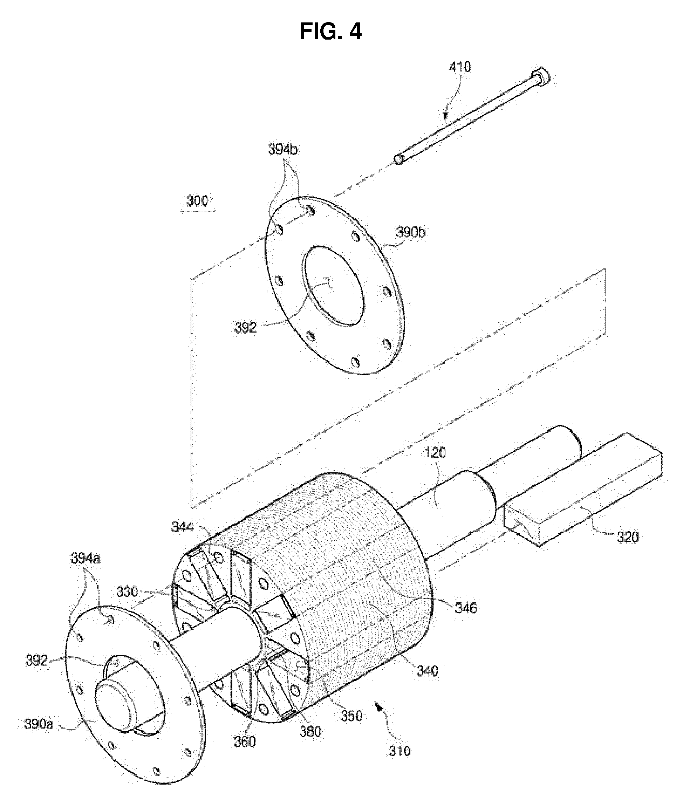

The permanent magnets 320 are arranged in the circumferential direction of the rotor 300 so as to be located in the radial shape around the motor shaft 120. Although FIG. 4 exemplarily illustrates 8 permanent magnets 320, the number of the permanent magnets 320 may be changed. The permanent magnets 320 may be ferrite magnets or magnets including a rare-earth element, such as neodymium or samarium.

The inner ends 321 of the permanent magnets 320 in the radial direction of the rotor 300 are disposed adjacent to the motor shaft 120, and the outer ends 322 of the permanent magnets 320 are disposed adjacent to the stator 200. The inner ends 321 and the outer ends 322 of the permanent magnets 320 include short sides 323 and 324 extending in the circumferential direction of the rotor 300. The short sides 323 and 324 of the rotor 300 are connected to long sides 325 and 326 extending in the radial direction of the rotor 300. The long sides 325 and 326 of the permanent magnets 320 have a longer length than the short sides 323 and 324 of the permanent magnets 320.

The N poles and the S poles of the permanent magnets 320 are arranged in the circumferential direction of the rotor 300. Among the permanent magnets 320, neighboring first permanent magnet 320a and second permanent magnet 320b are disposed such that the poles having the same polarity thereof are opposite. Through such a magnet circuit, magnetic flux generated from the permanent magnets 320 is concentrated and thus, performance of the motor may be improved while reducing the size of the motor.

The rotor body 310 includes a sleeve 330 forming a shaft hole 332 into which the motor shaft 120 is inserted, and rotor cores 340 connected to the sleeve 330. The sleeve 330 is formed in a ring shape, and includes an inner circumference 334 contacting the motor shaft 120 inserted into the shaft hole 332 and an outer circumference 336 opposite the permanent magnets 320 inserted into the rotor body 310.

A thickness t between the inner circumference 334 and the outer circumference 336 of the sleeve 330 may be 1.0mm to 3.0mm. If the thickness t is more than 3.0mm, magnetic flux leaking from the rotor cores 340 to the sleeve 330 is excessively increased and thus, performance of the motor is lowered, and if the thickness t is less than 1.0mm, a structural problem, such as deformation of the sleeve 330 when the motor shaft 120 is fitted into the shaft hole 332 by pressing, may occur.

The rotor cores 340 support the permanent magnets 320 and form paths of magnetic flux (i.e., magnetic paths) generated from the permanent magnets 320. The rotor cores 340 are arranged in the circumferential direction of the rotor 300 and separated from each other so as to form rotor slots 350 to receive the permanent magnets 320.

The rotor cores 340 may be connected to the sleeve 330 through bridges 360. The bridges 360 corresponding to the rotor cores 340 thereof are arranged in the circumferential direction of the rotor 300. The bridges 360 may extend from the outer circumference 336 of the sleeve 330 and be connected to the inner ends of the corresponding rotor cores 340.

The width W1 of the bridges 360 may not exceed 1.0mm. The width W1 of the bridges 360 influences the amount of magnetic flux leaking to the sleeve 330 through the bridges 360. As the width W1 of the bridges 360 decreases, magnetic resistance increases and magnetic flux leakage may decrease.

However, since the bridges 360 serve to connect the rotor cores 340 to the sleeve 330, if the width W1 of the bridges 360 excessively decreases, the bridges 360 may be damaged or the rotor body 310 may be deformed during high-speed rotation of the rotor 300. Therefore, the width W1 of the bridges 360 may be not less than 0.4mm so as to maintain structural strength.

The permanent magnets 320 are respectively received in the rotor slots 350 restricted between two neighboring rotor cores 340. Since the permanent magnets 320 are separated from the sleeve 330, inner spaces 370 (with reference to FIG. 5) are formed between the permanent magnets 320 and the sleeve 330. Such inner spaces 370 may effectively suppress leakage of magnetic flux of the permanent magnets 320 toward the motor shaft 120 through the sleeve 330.

The outer ends 322 of the permanent magnets 320 are located farther inward than the outer surfaces of the rotor cores 340 in the radial direction of the rotor 300. Outer support protrusions 341 protruding to two neighboring rotor slots 350 are provided at the outer ends of the rotor cores 340. Both edges of the outer ends 322 of the permanent magnets 320 are supported by the outer support protrusions 341 protruding from two neighboring rotor cores 340.

The thickness t1 of the outer support protrusions 341 in the radial direction of the rotor 300 may be 0.5mm to 2mm. If the thickness t1 of the outer support protrusions 341 is excessively small, i.e., is less than 0.5mm, the outer support protrusions 341 are deformed or broken by centrifugal force during high-speed rotation of the rotor 300 and thus, the permanent magnets 320 may be separated from the rotor slots 350. If the thickness t1 of the outer support protrusions 341 is excessively great, i.e., exceeds 2mm, the radius of the rotor 300 is unnecessarily increased and is thus disadvantageous in terms of miniaturization of the motor.

One open side of the rotor slot 350, i.e., a space 352 defined by two neighboring rotor cores 340 and the outer end 322 of the permanent magnet 320, is closed by a cover member 346. The cover member 346 connects the two neighboring rotor cores 340, is disposed at the outside of the outer support protrusions 341 in the radial direction of the rotor 300, and is separated from the outer support protrusions 341. The cover members 346 may be formed of the same material as the rotor cores 340 integrally with the rotor cores 340.

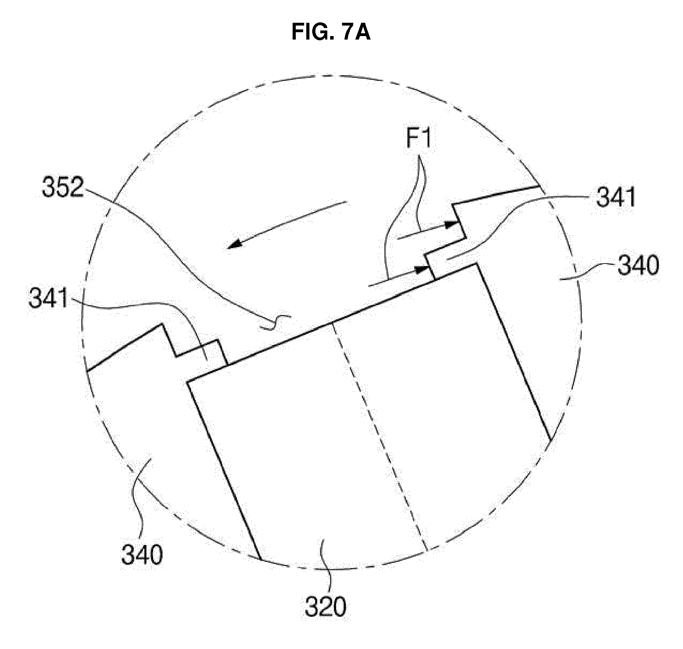

As exemplarily shown in FIG. 7A, during the rotating process of the rotor 300, fluid around the rotor 300 applies resistance force F1 in a direction opposite to the rotating direction C of the rotor 300 through the opened side of the rotor slot 350. Such resistance force F1 causes both performance deterioration of the motor and noise of the motor.

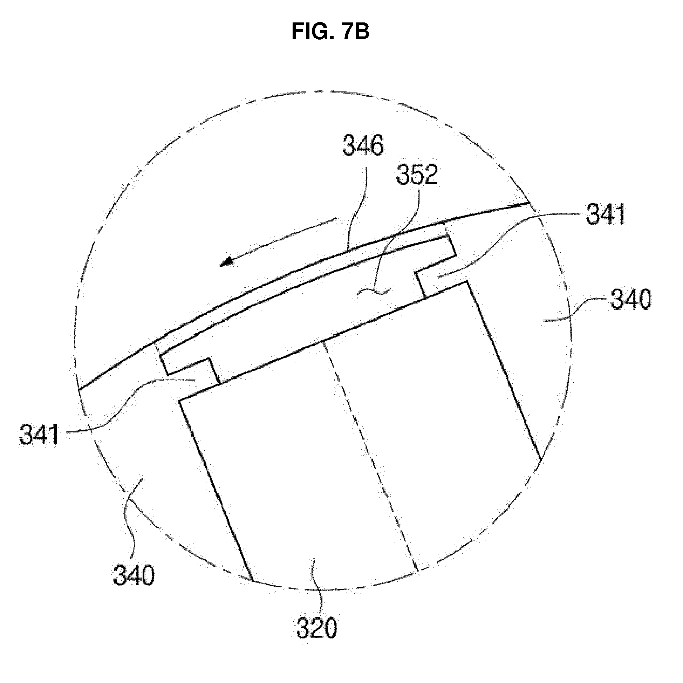

As exemplarily shown in FIG. 7B, the cover member 346 closes the opened side of the rotor slot 350 and reduces resistance force F1 due to fluid around the rotor 300 during the rotating process of the rotor 300, thus reducing performance deterioration and noise of the motor.

The cover members 346 together with the outer support protrusions 341 increase structural strength of the rotor 300. Therefore, the cover members 346 may prevent deformation of the outer support protrusions 341 or separation of the permanent magnets 320 from the rotor slots 350 by centrifugal force during high-speed rotation of the rotor 300.

The thickness t2 of the cover member 346 in the radial direction of the rotor 300 may be 0.2mm to 2mm. If the thickness t2 of the cover member 346 is excessively small, i.e., is less than 0.2mm, the strength of the rotor 300 is increased only slightly and manufacture of the cover member 346 is difficult. If the thickness t2 of the cover member 346 is excessively great, i.e., exceeds 2mm, magnetic flux leakage through the cover member 346 increases and thus, efficiency of the motor may be lowered.

The rotor cores 340 include inner support protrusions 380 supporting the inner ends 321 of the permanent magnets 320 so that the permanent magnets 320 are separated from the sleeve 330. The inner support protrusions 380 protrude from the inner ends of the rotor cores 340 toward two neighboring rotor slots 350. The sleeve 330, the rotor cores 340, the bridges 360, the outer support protrusions 341, the cover members 346, and the inner support protrusions 380 may be integrally formed of the same material and thus form the rotor body 310.

The thickness t3 of the inner support protrusions 380 in the radial direction of the rotor 300 may be 0.5mm to 2mm. If the thickness t3 of the inner support protrusions 380 is excessively small, i.e., is less than 0.5mm, structural strength of the inner support protrusions 380 decreases and thus, the inner support protrusions 380 may not stably support the permanent magnets 320. If the thickness t3 of the inner support protrusions 380 is excessively great, i.e., exceeds 2mm, the inner support protrusions 380 may have a negative influence on magnetization of the permanent magnets 320. The permanent magnets 320 are magnetized after a non-magnetized material is inserted into the rotor slots 350. Here, if the thickness t3 of the inner support protrusions 380 contacting the permanent magnets 320 is great, a magnetic field for magnetization of the permanent magnets 320 leaks by the inner support protrusions 380 and magnetization of the permanent magnet 320 at parts supported by the inner support protrusions 380 may be incompletely carried out.

The rotor body 310 and the first and second cover plates 390a and 390b may be combined by fastening members 410. The rotor body 310 includes through holes 344 passing through the rotor core 340 in the axial direction. The through holes 344 may be provided on at least one of the rotor cores 340. FIGS. 1 to 6 exemplarily illustrate the through holes 344 corresponding to the respective rotor cores 340.

First plate holes 394a and second plate holes 394b corresponding to the through holes 344 formed on the rotor core 340 may be formed on the first and second cover plates 390a and 390b.

Structural strength of the rotor 300 may be increased by disposing the first and second cover plates 390a and 390b at both sides of the rotor body 310 and integrating the first and second cover plates 390a and 390b with the rotor body 310 by inserting the fastening members 410 into the second plate holes 394b, the through holes 344, and the first plate holes 394a.

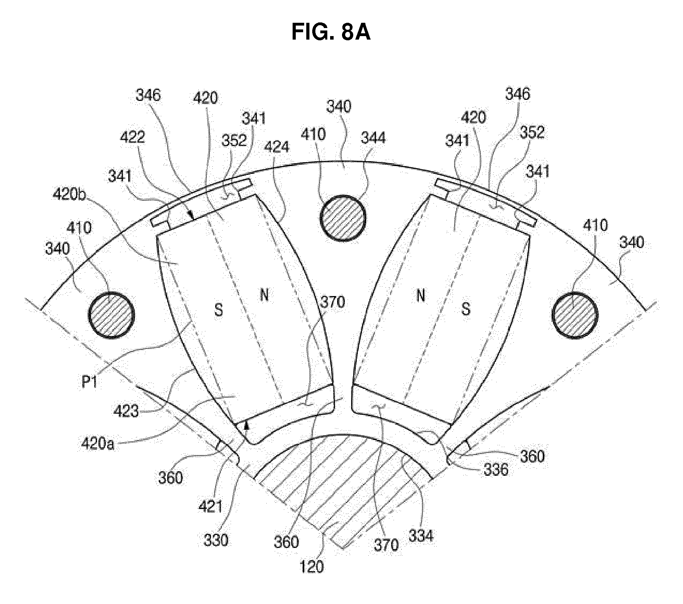

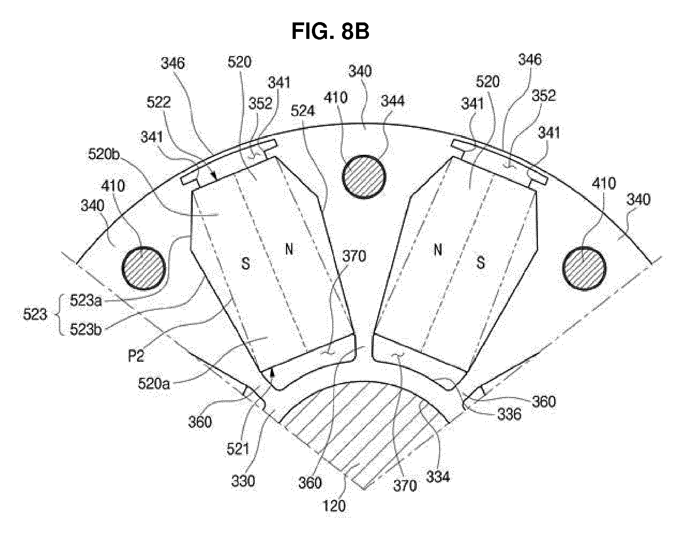

FIGS. 8A and 8B are views illustrating different examples of permanent magnets in the rotor in accordance with the embodiment of the present disclosure.

As exemplarily shown in FIG. 8A, both side surfaces 423 and 424 of permanent magnets 420 are formed in a bending shape in opposite directions toward neighboring rotor cores 340.

Both side surfaces of the rotor cores 340 supporting the permanent magnets 420 are formed in a shape corresponding to both side surfaces 423 and 424 of the permanent magnets 420.

The permanent magnet 420 includes a width increasing part 420a having a gradually increasing width and a width decreasing part 420b having a gradually decreasing width in a direction from an inner end 421 thereof to an outer end 422 thereof. The area of each of the both side surfaces 423 and 424 of the permanent magnet 420 is greater than the area of a virtual plane P1 connecting the outer end 422 of the permanent magnet 420 and the inner end 421 of the permanent magnet 420 at the shortest distance. Since the permanent magnets 420 are more stably supported due to such shape characteristics of the permanent magnets 420, separation of the permanent magnets 420 from the rotor cores 340 by centrifugal force generated during high-speed rotation of the rotor 300 is prevented.

As exemplarily shown in FIG. 8B, both side surfaces 523 and 524 of permanent magnets 520 are formed in a broken shape in opposite directions toward neighboring rotor cores 340. One side surface 523 of the permanent magnet 520 includes a first inclined surface 523a which is inclined from a virtual plane P2 connecting an outer end 522 of the permanent magnet 520 and an inner end 521 of the permanent magnet 520 at the shortest distance, and a second inclined surface 523b which is connected to the first inclined surface 523a so as to be inclined from the first inclined surface 523a.

Both side surfaces of the rotor cores 340 supporting the permanent magnets 520 are formed in a shape corresponding to both side surfaces 523 and 524 of the permanent magnets 520.

The permanent magnet 520 includes a width increasing part 520a having a gradually increasing width and a width decreasing part 520b having a gradually decreasing width in a direction from the inner end 521 thereof to the outer end 522 thereof. The area of each of the both side surfaces 523 and 524 of the permanent magnet 520 is greater than the area of the virtual plane P2 connecting the outer end 522 of the permanent magnet 520 and the inner end 521 of the permanent magnet 520 at the shortest distance. Since the permanent magnets 520 are more stably supported due to such shape characteristics of the permanent magnets 520, separation of the permanent magnets 520 from the rotor cores 340 by centrifugal force generated during high-speed rotation of the rotor 300 is prevented.

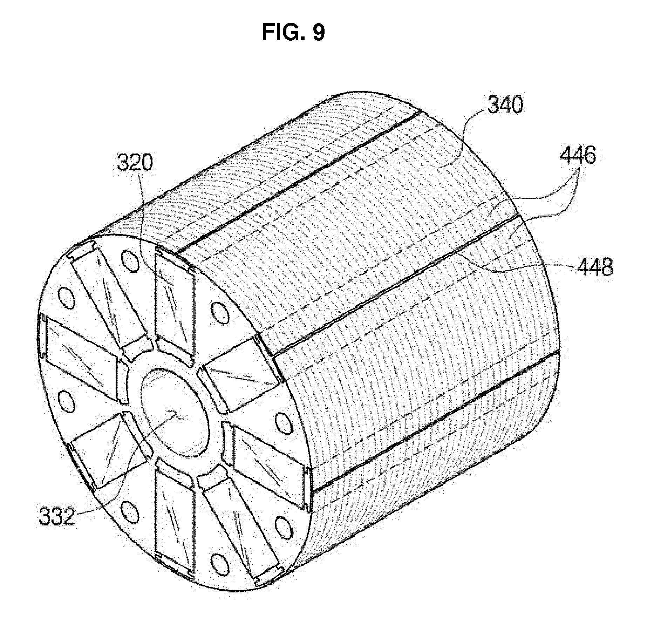

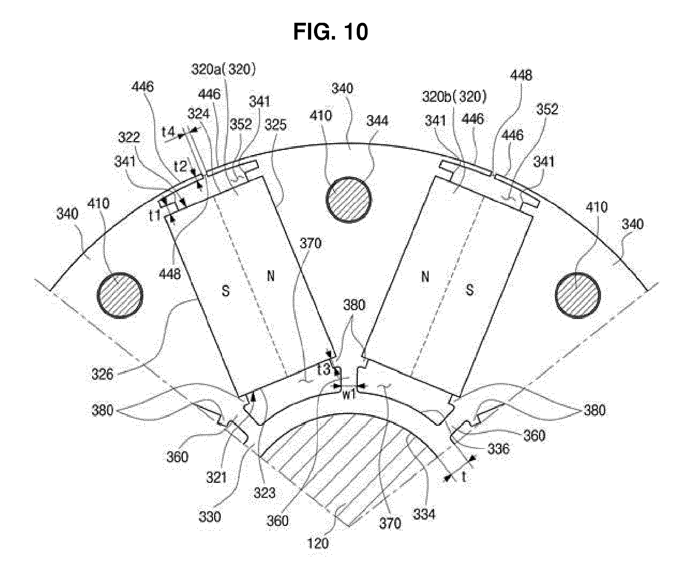

FIG. 9 is a perspective view illustrating a modification of the cover member in the rotor in accordance with the embodiment of the present disclosure, and FIG. 10 is a cross-sectional view illustrating the modification of the cover member in the rotor in accordance with the embodiment of the present disclosure.

As exemplarily shown in FIGS. 9 and 10, a cover member 446 includes at least one incision part 448 extending in the axial direction X. The incision part 448 reduces magnetic flux leaking through the cover member 446.

The cover member 446 may be formed separately from the rotor core 340 and combined with the rotor core 340, or be formed integrally with the rotor core 340. If the cover member 446 is formed integrally with the rotor core 340, the cover member 446 protrudes from the outer end of the rotor core 340 in the circumferential direction of the rotor 300, and the protruding length of the cover member 446 is greater than the protruding length of the outer support protrusions 341.

The width t4 of the incision part 448 in the circumferential direction of the rotor 300 may be 0.4mm to 1mm. If the width t4 of the incision part 448 is less than 0.4mm, magnetic flux leakage is reduced only slightly and formation of the incision part 448 is difficult. If the width t4 of the incision part 448 exceeds 1mm, resistance force due to fluid around the rotor 300 is reduced only slightly by the cover member 446.

The above-described motor 100 may be applied not only to a washing machine, a clothes dryer, an air conditioner, a refrigerator and compressor, but also to an electric vehicle requiring a small-sized high power motor.

As is apparent from the above description, a motor in accordance with one embodiment of the present disclosure reduces loss due to fluid resistance around a rotor during a rotating process of the rotor and may thus have enhanced performance.

The motor increases structural strength of the rotor and may thus, have enhanced durability and prevent the rotor from being deformed or damaged during high-speed rotation of the rotor.

Although a few embodiments of the present disclosure have been shown and described, it would be appreciated by those skilled in the art that changes may be made in these embodiments without departing from the principles of the invention, the scope of which is defined in the claims.

## Claims

1. A motor comprising:
a stator including stator cores and coils wound on the stator cores;
a rotor disposed at the inside of the stator and rotated by electromagnetic interaction with the stator; and
a motor shaft combined with the rotor so as to be rotated together with the rotor, wherein the rotor includes:
a plurality of rotor cores arranged to be separated from each other in the circumferential direction of the rotor;
a plurality of rotor slots formed between the plurality of rotor cores;
a plurality of permanent magnets inserted into the plurality of rotor slots; and
a plurality of cover members connecting neighboring rotor cores to close one opened side of each of the plurality of rotor slots.

2. The motor according to claim 1, wherein the plurality of cover members is formed integrally with the plurality of rotor cores.

3. The motor according to claim 1 or 2, wherein each of the plurality of rotor cores includes at least one outer support protrusion protruding to support the outer end of a neighboring permanent magnet.

4. The motor according to claim 3, wherein the plurality of cover members is disposed at the outside of the at least one outer support protrusion in a radial direction of the rotor.

5. The motor according to claim 4, wherein the plurality of the cover members is separated from the at least one outer support protrusion.

6. The motor according to any one of the preceding claims, wherein the thickness of the plurality of the cover members in a radial direction of the rotor is 0.2mm to 2mm.

7. The motor according to claim 3, or any one of the preceding claims dependent on claim 3, wherein the thickness of the at least one outer support protrusion in a radial direction of the rotor is 0.5mm to 2mm.

8. The motor according to claim 3, or any one of the preceding claims dependent on claim 3, wherein the thickness of the plurality of the cover members is equal to the thickness of the at least one outer support protrusion or smaller than the thickness of the at least one outer support protrusion.

9. The motor according to claim 3, or any one of the preceding claims dependent on claim 3, wherein each of the plurality of rotor cores further includes at least one inner support protrusion protruding to support the inner end of the neighboring permanent magnet.

10. The motor according to claim 9, wherein the thickness of the at least one inner support protrusion in a radial direction of the rotor is 0.5mm to 2mm.

11. The motor according to any one of the preceding claims, wherein each of the plurality of the cover members includes at least one incision part formed in an extending direction of the motor shaft.

12. The motor according to claim 11, wherein the width of the at least one incision part in a circumferential direction of the rotor is 0.4mm to 1mm.

13. The motor according to any one of the preceding claims, wherein each of the plurality of permanent magnets includes a width increasing part, the width of which gradually increases in at least some of sections thereof outward in a radial direction of the rotor.

14. The motor according to any one of the preceding claims, wherein each of the plurality of permanent magnets includes a width decreasing part, the width of which gradually decreases in at least some of sections thereof outward in a radial direction of the rotor.

15. The motor according to any one of the preceding claims, wherein the width of the plurality of permanent magnets gradually increases and then decreases outward in a radial direction of the rotor.
